Europäisches Patentamt

(19) European Patent Office

Office européen des brevets

(11) EP 0 838 496 A1

(12) **EUROPEAN PATENT APPLICATION**

(43) Date of publication:
29.04.1998 Bulletin 1998/18

(51) Int. Cl.⁶: **C08L 23/10**, C08L 51/06,
C08L 51/04

(21) Application number: 97117819.9

(22) Date of filing: 15.10.1997

(84) Designated Contracting States:
AT BE CH DE DK ES FI FR GB GR IE IT LI LU MC
NL PT SE

(30) Priority: 18.10.1996 JP 275932/96

(71) Applicant: UBE INDUSTRIES, LTD.
Ube-shi, Yamaguchi-ken 755 (JP)

(72) Inventors:
• Okamoto, Naomi
Ichihara-shi, Chiba (JP)
• Fukui, Osamu
Shinagawa-ku, Tokyo (JP)

(74) Representative:
Hoeger, Stellrecht & Partner
Uhlandstrasse 14 c
70182 Stuttgart (DE)

(54) **Thermoplastic resin composition**

(57) A thermoplastic resin composition having a light weight (density), excellent mechanical strength and modulus of elasticity and a satisfactory surface hardness comprises (1) 30 to 95% by weight of a matrix component (1) comprising a mixture of 0 to 95% by weight of at least one non-modified thermoplastic resin with 5 to 100% by weight of a chemical modification product of at least one non-modified thermoplastic resin, the non-modified thermoplastic resin being selected from crystalline propylene homopolymers and propylene-ethylene random and block copolymers and (2) 5 to 70% by weight of a dispersoid component comprising chemically modified 1,2-polybutadiene resin particles dispersed in the matrix component (1).

EP 0 838 496 A1

**Description**

BACKGROUND OF THE INVENTION

1. Field of the Invention

The present invention relates to a thermoplastic resin composition. More particularly, the present invention relates to a thermoplastic resin composition in which a matrix resin component is reinforced with particles of chemically modified and cross-linked 1,2-polybutadiene resin particle and which has a low specific gravity, and excellent heat resistance, impact resistance, scratch resistance, water resistance and surface gloss.

2. Description of the Related Art

It is known that although conventional crystalline polypropylene resins have a high rigidity, an excellent heat resistance, a low thermal expansion and a satisfactory molding processability and thus are useful for producing shaped articles, they are disadvantageous in that the impact resistance thereof at low temperature is not satisfactory. As a method for enhancing the impact resistance, it is well known to mix the polypropylene resin with an ethylene-$\alpha$-olefin copolymer rubber and/or a polyethylene. Also, as a method of improving the mechanical properties of the polypropylene resins, it is widely utilized to mix the polypropylene resins with an inorganic filler.

However, the above-mentioned methods disadvantageously cause the rigidity, heat resistance and oil resistance of the polypropylene resins to be decreased and/or the specific gravity thereof not to reduce.

Accordingly, it has been attempted to enhance the rigidity, heat resistance, oil resistance and mechanical strength of the polypropylene resins by mixing polyamide resins to the polypropylene resin. However, this attempt has not been successful because the polyamide resins are incompatible with the polypropylene resins.

For the purpose of enhancing the rigidity, heat resistance, oil resistance and mechanical strength of the polypropylene resins without degrading the light weight thereof, Japanese Examined Patent Publication No. 45-30,945 discloses a polypropylene resin composition comprising a polypropylene resin blended with a chemically modified polypropylene resin with an unsaturated carboxylic acid or a derivative thereof. Also, Japanese Unexamined Patent Publication No. 59-149,940 discloses a method for improving polypropylene resins by blending thereto a chemical modification product of an ethylene-$\alpha$-olefin copolymer rubber with an unsaturated carboxylic acid or a derivative thereof. Further, Japanese Unexamined Patent Publication No. 3-14,854 discloses a polypropylene resin composition comprising a polyamide resin modified with a clay mineral and blended into a polypropylene resin and having improved heat resistance, impact resistance, scratch resistance and deformation resistance of shaped articles.

Furthermore, Japanese Unexamined Patent Publication No. 63-172,747 discloses a resin composition prepared by blending a polypropylene resin with a 1,2-polybutadiene resin, and having a light weight, improved elasticity, thermal performances, mechanical strength and color brightness, and excellent processability and wear resistance.

The above-mentioned conventional polypropylene resin compositions are still not satisfactory in the above-mentioned properties.

SUMMARY OF THE INVENTION

An object of the present invention is to provide a thermoplastic resin composition having enhanced stretchability and flexibility, a light weight (a low specific gravity), and improved impact resistance, heat resistance and hardness.

The above-mentioned object can be attained by the thermoplastic resin composition of the present invention which comprises:

(1) 30 to 95% by weight of a matrix polymeric component comprising 0 to 95% by weight of at least one non-modified thermoplastic resin, and 5 to 100% by weight of at least one chemical modification product of at least one non-modified thermoplastic resin, the non-modified thermoplastic resin being selected from crystalline propylene homopolymers, crystalline propylene-ethylene random copolymers, and crystalline propylene-ethylene block copolymers; and

(2) 5 to 70% by weight of a dispersoid polymeric component comprising particles of a chemically modified and cross-linked 1,2-polybutadiene resin dispersed in the matrix resin component (1). The thermoplastic resin composition of the present invention optionally further comprises a rubber component (3) comprising at least one member selected from the group consisting of chemically non-modified and modified synthetic rubbers in an amount of 100 parts by weight or less per 100 parts by weight of the total of the matrix polymeric component (1) and the dispersoid polymeric component (2).

DESCRIPTION OF THE PREFERRED EMBODIMENTS

The thermoplastic resin composition of the present invention comprises (1) 30 to 95% by weight of a matrix polymeric component which comprises (a) 0 to 95% by weight of at least one non-modified thermoplastic resin, and (b) 5 to 100% by weight of at least one chemical modification product of at least one non-modified thermoplastic resin, the non-modified thermoplastic resin being selected from crystalline propylene homopolymers, crystalline propylene-ethylene random copolymers, and crystalline propylene-ethylene block copolymers; and (2) 5 to 70% by weight of a dispersoid polymeric component comprising particles of a chemically modified and cross-linked 1,2-polybutadiene resin dispersed in the matrix resin component (1).

In the matrix polymeric component (1), the non-modified thermoplastic resin is selected from the group consisting of crystalline propylene homopolymers, and crystalline propylene-ethylene random and block copolymers. These homopolymers and copolymers preferably have a melt flow index (MI) of 0.3 to 70g/10 minutes determined at a temperature of 230°C under a load of 2160 g/cm$^2$.

The propylene-ethylene random copolymers preferably have an ethylene content of 5% by weight or less, more preferably 0.5 to 5% by weight. The propylene-ethylene block copolymers preferably have an ethylene content of 3 to 15% by weight, more preferably 5 to 10% by weight.

Among the propylene homopolymers and copolymers, propylene-ethylene block copolymers having an MI of 0.3 to 50g/10 minutes and an ethylene content of 3 to 10% by weight. These homopolymers and copolymers may be used alone or in a mixture of two or more thereof.

The chemically modified thermoplastic resin is prepared by chemically modifying at least one thermoplastic resin selected from the crystalline propylene homopolymers and the crystalline propylene-ethylene random and block copolymers with a chemical modifying agent comprising at least one member selected from unsaturated aliphatic carboxylic acids, salts, esters, amides and anhydrides thereof and silane coupling agent, together with at least one organic peroxide compounds.

In the preparation of the chemically modified thermoplastic resin, the unsaturated aliphatic carboxylic acids for the chemically modifying agent are preferably selected from acrylic acid, methacrylic acid, itaconic acid, maleic acid, fumaric acid, citraconic acid and crotonic acid; the salts, esters, amides and anhydrides of the unsaturated aliphatic carboxylic acids are preferably selected from glycidyl methacrylate, 2-hydroxyethyl methacrylate, polyethyleneglycol dimethacrylate, N-methylol methacrylamide, calcium methacrylate, acrylamide, methacrylamide, maleic anhydride, itaconic anhydride, and citraconic anhydride, more preferably maleic anhydride and itaconic anhydride.

The silane-coupling agents usable for the present invention include vinyltrimethoxysilane, vinyltriethoxysilane, vinyl-tris(β-methoxyethoxy)silane, vinyltriacetylsilane, γ-methacryloxypropyltrimethoxysilane, β-(3,4-epoxycyclohexyl)ethyltrimethoxysilane, γ-glycidoxypropyltrimethoxysilane, γ-glycidoxypropylmethyldimethoxysilane, γ-glycidoxypropylmethyldiethoxysilane, γ-glycidoxypropylethyldimethoxysilane, γ-glycidoxypropylethyldiethoxysilane, N-β-(aminoethyl)aminopropyltriethoxysilane, N-β-(aminoethyl)aminopropylmethyldiethoxysilane, N-β-(aminoethyl)aminopropylethyldimethoxysilane, N-β-(aminoethyl)aminopropylethyldiethoxysilane, γ-aminopropyltriethoxysilane, N-phenyl-γ-aminopropyltrimethoxysilane, γ-[N-(β-methacryloxyethyl)-N,N-dimethylammonium(chloride)]propylmethoxysilane, and styryldiaminosilane.

In the preparation of the chemically modified thermoplastic resin, at least one organic peroxide compound is used in addition to the chemically modifying agent. The organic peroxide compound is not limited to a specific group of compounds, and is usually selected from those having a one minute half-life temperature of amount 160 to 240°C. This type of organic peroxide compounds include tert-butylperoxyisopropylcarbonate, di-tert-butyldiperoxyphthalate, tert-peroxyacetate, 2,5-dimethyl-2,5-bis(benzoylperoxy)hexane, di-tert-butylperoxyisophthalate, tert-butyldiperoxylaurate, tert-butyldiperoxymaleic acid, tert-butyldiperoxybenzoate, methylethylketoneperoxide, dicumylperoxide, cyclohexanoneperoxide, and tert-butylcumylperoxide. The chemically modified thermoplastic resin (MPP) is produced by mixing a thermoplastic resin as defined above with a chemically modifying agent as defined above and at least one organic peroxide compound, and kneading the mixture in an extruder or kneader at a temperature equal to or higher the melting temperature of the thermoplastic resin.

In this preparation, the chemically modifying agent is used in an amount of 0.05 to 5 parts by weight, preferably 0.1 to 3.0 parts by weight, per 100 parts by weight of the non-modified thermoplastic resin (PP). If the chemically modifying agent is used in an amount less than 0.05 parts by weight, the resultant chemically modified thermoplastic resin (MPP) may exhibit an unsatisfactory mechanical strength. Also, when the amount is more than 5 parts by weight, the resultant chemically modified resin (MPP) may exhibit too high a hardness and too high a brittleness.

Advantageously, the organic peroxide compound is used in an amount of about a half of the amount of the chemically modifying agent. When the organic peroxide compound is used in too large or small amount, the resultant chemically modified thermoplastic resin (MPP) may exhibit unsatisfactory mechanical properties.

The dispersoid polymeric component (2) usable for the thermoplastic resin composition of the present invention comprises particles of a chemically modified and cross-linked 1,2-polybutadiene resin dispersed in the matrix polymeric

3

component (1). The 1,2-polybutadiene resin is preferably selected from syndiotactic 1,2-polybutadiene resins (SPBD) having a melting point of 110 to 220°C, preferably 130 to 220°C, more preferably 140 to 220°C. When the melting point is less than 110°C, the resultant SPBD has an insufficient crystallinity and an unsatisfactory heat resistance and thus cannot exhibit a sufficient reinforcing performance for the matrix polymeric component (1). In the present invention, the syndiotactic 1,2-polybutadiene resins having a melting temperature of 110 to 220°C are used alone or in mixture of two or more thereof which are different in melting temperature from each other.

The SPBD is chemically modified to provide a chemically modified SPBD (MSPBD). The MSPBD has a glass transition temperature of 60°C to 110°C, while the glass transition temperature of SPBD is -15°C to 40°C.

The 1,2-structure content of the SPBD having a melting temperature of 110°C to 220°C can be determined by measuring $^1$H-NMR spectrum of the SPBD, and by measuring the peak area. The syndioctatic structure (syndiotacticity) of the SPBD can be determined from the $^{13}$C-NMR spectrum of the SPBD.

The SPBD generally has, in addition to the 1,2-structure, a cis-1,4-structure, and usually the 1,2-structure content of the SPBD is 76% or more, preferably 82% or more, more preferably 84% or more. When the melting temperature is less than 110°C, the resultant SPBD exhibits a low crystallinity which causes the reinforcing performance of the SPBD to be insufficient, and a decreased heat resistance.

The SPBD can be produced by conventional methods disclosed, for example, in Japanese Examined Patent Publication No. 53-39,917, No. 54-5,436, No. 56-18,005, and No. 62-58,613 and Japanese Unexamined Patent Publication No. 6-293,852. The production methods for the SPBD are not limited to those mentioned above.

The chemically modified 1,2-polybutadiene resin particles can be produced, for example, by mixing SPBD particles with a solution of a chemically modifying agent and at least one organic peroxide compound in a volatile solvent, for example, acetone, lower alkyl alcohols or hexane, at room temperature in a mixer, for example, a Henschel mixer, while agitating the mixture; drying the mixture under vacuum; and subjecting the dried mixture to a chemical modification procedure at a temperature at which the SPBD particles do not melt, for example, of about 30°C below the melting temperature of the SPBD particles, in an autoclave, while agitating the mixture, to cause the surface portions of the SPBD particles to be chemically modified with the chemically modifying agent and the organic peroxide compound. In this reaction procedure, it is important that during the procedure, the SPBD particles are prevented from agglomeration and aggregation thereof and that the particle size is unchanged. Then the resultant chemically modified SPBD particles (MSPBD particles) are washed with the above-mentioned volatile solvent to remove the non-reacted chemically modifying agent and organic peroxide compound.

The MSPBD particles are subjected to an irradiation by an electron beam to produce chemically modified and cross-linked SPBD particles (CMSPBD particles).

Preferably, the electron beam irradiation to the MSPBD particles is carried out to an extent such that the glass transition temperature of the resultant CMSPBD particles reaches a level of 60°C or more.

In the preparation of the MSPBD, the chemically modifying agent is used preferably in an amount of 0.05 to 5 parts by weight, more preferably 0.1 to 3 parts by weight, per 100 parts by weight of the non-modified SPBD particles. When the chemically modifying agent is used too large or small an amount, the resultant MSPBD particles may exhibit too high a hardness and a brittleness and thus may be easily cracked or broken.

The organic peroxide compound is used in an amount of about a half of the amount of the chemically modifying agent. When this amount is too much or less, the resultant MSPBD particles may exhibit too high a hardness and a brittleness and thus may be easily cracked or broken.

The composition of the thermoplastic resin composition of the present invention comprising the matrix polymeric component (1) and the dispersoid polymeric component (2) will be explained below.

The thermoplastic resin composition of the present invention comprises 30 to 95% by weight, preferably 40 to 80% by weight, of the matrix polymeric component (1) and 5 to 70% by weight, preferably 20 to 60% by weight of the dispersoid polymeric component (1).

If the content of the matrix polymeric component (1) is less than 30% by weight, or the content of the dispersoid polymeric component (2) is more than 70% by weight, the resultant thermoplastic resin composition exhibits unsatisfactory mechanical properties. When the content of the matrix polymeric component (1) is more than 95% by weight, and the content of the dispersoid polymeric component (2) is less than 5% by weight, the mechanical properties of the resultant thermoplastic resin composition are also unsatisfactory.

In the thermoplastic resin composition of the present invention, the CMSPBD particles preferably have an average particle size of 0.1 to 10 μm, more preferably 0.5 to 5 μm. When the average particle size is less than 0.1 μm, the resultant particles are too small and thus cannot exhibit a reinforcing performance. Also, when the average particle size is more than 10 μm, the resultant particles are too large and thus cannot exhibit a sufficient reinforcing performance.

The thermoplastic resin composition of the present invention optionally comprises, in addition to the matrix polymeric component (1) and the dispersoid polymeric component (2), (3) a rubber component comprising at least one member selected from chemically non-modified and modified synthetic rubbers, in an amount of 100 parts by weight or less, preferably 5 to 100 parts by weight, per 100 parts by weight of the total of the matrix polymeric component (1) and the dispersoid polymeric component (2).

The non-modified synthetic rubbers usable for the present invention are preferably selected from ethylene-α-olefin copolymer rubbers; thermoplastic, elastomeric block copolymer rubbers of the formula:

A-(B-A)n

wherein A represents a polymeric block of a monovinyl-substituted aromatic hydrocarbon monomer, for example, styrene, B represents a elastomeric block of a conjugated diene monomer, for example, butadiene and isoprene, and n represents an integer of 1 to 5, and hydrogenation products of the above-mentioned thermoplastic, elastomeric block copolymer rubbers.

The ethylene-α-olefin copolymer rubbers preferably have an ethylene content of 30 to 95% by weight, more preferably 60 to 90% by weight. The α-olefin is preferably selected from α-olefins having 3 to 10 carbon atoms, for example, propylene, butene-1, 4-methyl pentene-1, octene-1, and decene-1. The ethylene-α-olefin copolymer rubbers optionally contain a small amount of a diene component, for example, 1,3-butadiene, 1,4-hexadiene, 5-ethylidene-2-norbornene and dicyclopentadiene.

The thermoplastic, elastomeric block copolymer rubbers are preferably selected from styrene-butadiene-styrene block copolymer rubbers (SBS), styrene-isoperene-styrene block copolymer rubbers (SIS), styrene-ethylene • butylene-styrene block copolymer rubbers (SEBS) which are produced by hydrogenating the SBS rubbers, and styrene-ethylene • propylene-styrene block copolymer rubbers (SEPS) which are produced by hydrogenating the SIS rubbers.

The chemically modified synthetic rubbers usable for the present invention are prepared by chemically modifying the non-modified synthetic rubbers with a chemically modifying agent and at least one organic peroxide compound. The chemically modifying agent preferably comprises at least one member selected from the same unsaturated aliphatic carboxylic acids, salts, esters, amides and anhydrides thereof and silane-coupling agents as mentioned above, and at least one organic peroxide compound which is preferably selected from the same compounds as those mentioned above.

The rubber component (3) is preferably added in an amount of 100 parts by weight or less, more preferably 5 to 100 parts by weight, per 100 parts by weight of the total of the matrix and dispersoid polymeric components (1) and (2). The rubber component (3) contribute to enhancing the impact strength of the resultant thermoplastic resin composition of the present invention.

When the content of the rubber component (3) is too small, the desired impact strength-enhancing effect on the resin composition may not be attained. Also, when the content of the rubber component (3) is too large, the resultant thermoplastic resin composition may exhibit unsatisfactory mechanical properties.

The thermoplastic resin composition of the present invention is optionally added with a conventional additive for conventional rubber and resin compositions, for example, antioxidant, ultraviolet ray-absorber, lubricant, pigment, antistatic agent, copper damage-preventing agent, flame retardant, neutralizing agent, plasticizer, nucleating agent, dye, foaming agent and slip agent, in an appropriate amount.

The thermoplastic resin composition of the present invention can be produced by mixing and kneading the components by using a conventional mix-kneading apparatus usable for conventional resin or rubber compositions. In the production, the components are dry-blended by a blender, for example, Henschel mixer, V-blender, ribbon blender or tumbler blender; the blend is melt-kneaded by a single screw extruder, twin screw extruder, special twin screw extruder equipped, in addition to a common material feeder with an additional material feeder connected to a cylinder portion of the extruder, kneader or Banbury mixer; and then the melt-kneaded mixture is shaped or pelletized.

EXAMPLES

The present invention will be further explained by the following examples which are not intended to limit the scope of the present invention in any way.

In the examples are comparative examples and the melting temperature, glass transition temperature and 1,2-structure content of SPBD, the density, tensile strength, flexual strength, modulus of elasticity in flexure, Izod impact strength, heat distortion temperature, surface hardness and high speed impact strength of the thermoplastic resin composition were measured by the following testing methods.

(1) Melting temperature and glass transition temperature

The melting temperature and glass transition temperature of a resin were determined from a DSC curve obtained heating the resin by a differential scanning calorimeter (model: DSC 50, made by K.K. Shimazu Seisakusho) from -30°C to 230°C at a temperature-increasing rate of 10°C/minute.

**(2)** 1,2-structure content

The 1,2-structure content of a resin was determined by a $^1$H-NMR spectrum method (solvent: o-dichlorobenzene, TMS standard) using a NMR spectrometer (model: FX-200, made by Nihon Denshi K.K.). Also, it was confirmed that the 1,2-structure of SPBD is a syndiotactic structure, by a $^{13}$C-NMR spectrum.

**(3)** Melt index (MI)

MI was determined in accordance with ASTM D1238.

**(4)** Density

Density was determined in accordance with ASTM D1505.

**(5)** Tensile strength

Tensile strength was determined in accordance with ASTM D638.

**(6)** Flexual strength and modulus of elasticity in flexure

Flexual strength and modulus of elasticity in flexure were determined in accordance with ASTM D2584.

**(7)** Izod impact strength

Izod impact strength was measured in accordance with ASTM D256 using a notched specimen.

**(8)** Heat distortion temperature

Thermal deformation temperature was determined in accordance with ASTM D648.

**(9)** Surface hardness

Surface hardness was determined by a Rockwell hardness test in accordance with ASTM D785.

**(10)** High speed impact strength

A test piece consisting of a circular plate having a thickness of 1.6 mm and a diameter of 100 mm was impacted with a round missile having a temperature of -30°C which fell toward the test piece at a speed of 2.5 m/sec., and a stress-strain curve in the breaking procedure of the test piece was established. The high speed impact strength of the test piece was determined from the area formed by the curve in accordance with an area impact measurement method. The larger the determined value, the higher the impact resistance.

**(11)** Dispersoid particle size

A sample of resin particles was dyed with a vapor of osmium tetraoxide and formed into a super thin specimen. The dispersion of the resin particles in the specimen was observed by a transmission type electron microscope (model: H-7100, made by Hitachi Seisakusho), to determine an average particle size of the resin particles.

The non-modified and modified crystalline propylene-ethylene block copolymer resins (PP and MPP). Modified and cross-linked SPBD (CMSPBD) and modified ethylene-propylene copolymer rubber (MEPR) used for the examples and comparative examples were prepared by the following procedures.

Referential Example 1 (PP)

A non-modified crystalline propylene-ethylene copolymer resin (PP) had a melting temperature of 160°C, a MI of 5.0g/10 minutes, a density of 0.908 g/cm$^2$, and an ethylene content of 5% by weight.

Referential Example 2 (Preparation of MPP)

A modified crystalline propylene-ethylene copolymer resin (MPP) was prepared by mixing 100 parts by weight of a propylene-ethylene block copolymer resin having a MI of 1.0g/10 minutes, and an ethylene content of 5% by weight with 0.50 part by weight of maleic anhydride and 0.25 parts by weight of tert-butyl-peroxybenzoate; melt-kneading the mixture at a temperature of 220°C in a kneader, and pelletizing the kneaded mixture.

Referential Example 3 (Preparation of CMSPBD)

A non-modified syndiotactic 1,2-polybutadiene (SPBD) having a melting temperature of 200°C, a 1,2-structure content of 95.0%, and a glass transition temperature of 32°C in an amount of 100 parts by weight was mixed with 0.50 part by weight of maleic anhydride and 0.25 part by weight of tert-butyl peroxybenzoate, the mixture was agitated at a temperature of 170°C which is 30°C below the melting temperature of the SPBD for 5 minutes. The resultant MSPBD particles were rinsed with acetone to remove the chemically modifying agent and the organic peroxide compound. Then the MSPBD particles were subjected to electron beam irradiation at a dose of 23 Mrad. The resultant SMSPBD particles had a glass transition temperature of 108°C.

Referential Example 4 (MEPR)

A non-modified ethylene-propylene copolymer rubber (EPR) having an ethylene content of 73% by weight and a $ML_{1+4}$ viscosity of 50 at 100°C in an amount of 100 parts by weight was mixed with 1.0 part by weight of maleic anhydride and 0.5 part by weight of dicumyl peroxide, and the resultant mixture was heated at a temperature of 180°C for 10 minutes, to prepare a chemically modified EPR (MEPR). The resultant MEPR had a MI of 0.7g/10 minute.

Examples 1 to 7 and Comparative Example 1

In each of Examples 1 to 7 and Comparative Example 1, the matrix polymeric component (1), the dispersoid polymeric component (2) and the rubber component (3) as shown in Table 1 were dry blended in the amounts as shown in Table 1, melt-kneaded in a single screw extruder having a screw diameter of 65 mm at a temperature of 230°C extruded from the extruder, to provide pellets of a thermoplastic resin composition.

Testing specimens were prepared by melt-molding the thermoplastic resin composition pellets by an injection molding machine at a temperature of 230°C. The specimens were subjected to the above-mentioned tests. The test results are shown in Table 1.

Table 1 clearly shows that the thermoplastic resin compositions of Examples 1 to 7 in accordance with the present invention have a low density (light weight) and excellent mechanical strength, modulus of elasticity and heat distortion

## Table 1

| Item | Example No. | Example 1 | 2 | 3 | 4 | 5 | 6 | 7 | Comparative Example 1 |
|---|---|---|---|---|---|---|---|---|---|
| Matrix Polymeric component (1) (wt%) | PP(*)1 | 30 | 50 | 10 | 25 | 25 | 20 | - | 100 |
|  | MPP(*)2 | 30 | 30 | 30 | 30 | 30 | 30 | 60 | - |
| Dispersoid polymeric component (2) (wt%) | CMSPBD(*)3 | 40 | 20 | 60 | 40 | 40 | 40 | 40 | - |
| Rubber component (3) (wt%) | MEPR(*)4 | - | - | - | 5 | - | 10 | - | - |
|  | SEBS | - | - | - | - | 5 | - | - | - |
| Density (g/cm$^3$) | | 0.904 | 0.902 | 0.906 | 0.903 | 0.904 | 0.902 | 0.908 | 0.908 |
| Tensile strength (kg/cm$^2$) | | 390 | 330 | 450 | 360 | 370 | 310 | 400 | 300 |
| Flexual strength (kg/cm$^2$) | | 680 | 550 | 770 | 580 | 630 | 480 | 700 | 430 |
| Modulus of elasticity in flexure (kg/cm$^2$) | | 23,000 | 19,000 | 26,000 | 18,500 | 20,000 | 13,500 | 24,000 | 15,000 |
| Notched Izod impact strength (kg·cm/cm) | | 8 | 7 | 11 | 18 | 21 | 21 | 8 | 4 |
| Heat distortion temperature (°C) | | 140 | 134 | 150 | 130 | 135 | 120 | 143 | 125 |
| Rockwell hardness | | 103 | 98 | 105 | 92 | 97 | 75 | 105 | 92 |
| High speed impact strength (kg·cm) | | 380 | 260 | 420 | 750 | 760 | 760 | 360 | 190 |
| Average particle size of component (2) | | 1.2 | 1.1 | 1.4 | 1.2 | 1.2 | 1.3 | 1.3 | - |

[Note]

(*)1:   PP ... Non-modified propylene-ethylene block copolymer resin shown in Referential Example 1.

(*)2:   MPP ... Chemically modified propylene-ethylene block copolymer resin prepared in Referential Example 2.

(*)3:   CMSPBD ... Chemically modified and cross-linked syndiotactic 1,2-polybutadiene resin particles prepared in Referential Example 3.

(*)4:   MEPR ... Chemically modified ethylene-propylene copolymer rubber prepared in Referential Example 4.

8

temperature and a satisfactory surface hardness. Namely, the dispersoid polymeric component comprising the chemically modified and cross-linked 1,2-polybutadiene resin particles exhibits a significant reinforcing performance for the thermoplastic resins.

**Claims**

1. A thermoplastic resin composition comprising:

   (1) 30 to 95% by weight of a matrix polymeric component comprising 0 to 95% by weight of at least one non-modified thermoplastic resin, and 5 to 100% by weight of at least one chemical modification product of at least one non-modified thermoplastic resin, the non-modified thermoplastic resin being selected from crystalline propylene homopolymers, crystalline propylene-ethylene random copolymers, and crystalline propylene-ethylene block copolymers; and
   (2) 5 to 70% by weight of a dispersoid polymeric component comprising particles of a chemically modified and cross-linked 1,2-polybutadiene resin dispersed in the matrix resin component (1).

2. The thermoplastic resin composition as claimed in claim 1, further comprising (3) a rubber component comprising at least one member selected from the group consisting of chemically non-modified and modified synthetic rubbers, in an amount of 100 parts by weight or less per 100 parts of the total of the matrix polymeric component (1) and the dispersoid polymeric component (2).

3. The thermoplastic resin composition as claimed in claim 1, wherein the chemically modified and cross-linked 1,2-polybutadiene resin particles are prepared by chemically modifying and then cross-linking particles of a non-modified 1,2-polybutadiene resin.

4. The thermoplastic resin composition as claimed in claim 1, wherein the chemically modified and cross-linked 1,2-polybutadiene resin particles have an average particle size of 0.1 to 10 $\mu$m.

5. The thermoplastic resin composition as claimed in claim 1, wherein the chemically modified and cross-linked 1,2-polybutadiene resin has a glass transition temperature of 60°C or more.

6. The thermoplastic resin composition as claimed in claim 1, wherein the chemical modification of the non-modified thermoplastic resins is effected by using a chemical modifying agent comprising at least one member selected from the group consisting of unsaturated carboxylic acids, salts, esters, amides, and anhydrides thereof and silane-coupling agents, together with at least one organic peroxide compound.

7. The thermoplastic resin composition as claimed in claim 3, wherein the preparation of the chemically modified and cross-linked 1,2-polybutadiene resin particles are carried out by chemically modifying the non-modified 1,2-polybutadiene resin particles with a chemical modifying agent comprising at least one member selected from the group consisting of unsaturated carboxylic acids, salts, esters, amides and anhydrides thereof and silane-coupling agents, together with at least one organic peroxide compound; and cross-linking the chemically modified 1,2-polybutadiene resin particles by electron beam irradiation thereto.

8. The thermoplastic resin composition as claimed in claim 2, wherein the non-modified synthetic rubbers are selected from the group consisting of ethylene-$\alpha$-olefin copolymer rubbers, thermoplastic, elastomeric block copolymer rubbers of the formula:

$$A\text{-}(B\text{-}A)n$$

   wherein A represents a polymeric block of a monovinyl-substituted aromatic hydrocarbon monomer, B represents a elastomeric block of a conjugated diene monomer, and n represents an integer of 1 to 5, and hydrogenation products of the above-mentioned thermoplastic, elastomeric block copolymer rubbers.

9. The thermoplastic resin composition as claimed in claim 2, wherein the chemically modified synthetic rubbers are chemical modifying products of the non-modified synthetic rubbers with a chemical modifying agent comprising at least one member selected from the group consisting of unsaturated carboxylic acids, salts, esters, amides and anhydrides thereof and silane-coupling agents, together with least one organic peroxide compound.

10. The thermoplastic resin composition as claimed in claim 1, wherein the crystalline propylene-ethylene random copolymer for the matrix polymeric component (1) has an ethylene content of 5% by weight or less.

11. The thermoplastic resin composition as claimed in claim 1, wherein the crystalline propylene-ethylene block copolymer for the matrix polymeric component (1) has an ethylene content of 3 to 15% by weight.

**European Patent Office**

**EUROPEAN SEARCH REPORT**

Application Number

EP 97 11 7819

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 562 230 A (FUKUI OSAMU ET AL) <br> * column 4, line 50 – line 59 * <br> * abstract * <br> --- | 1 | C08L23/10 <br> C08L51/06 <br> C08L51/04 |
| A | DATABASE WPI <br> Section Ch, Week 8021 <br> Derwent Publications Ltd., London, GB; <br> Class A17, AN 80-37305C <br> XP002055971 <br> & JP 55 050 008 A (IDEMITSU KOSAN CO LTD) <br> , 11 April 1980 <br> * abstract * <br> --- | 1 | |
| A | DATABASE WPI <br> Section Ch, Week 8201 <br> Derwent Publications Ltd., London, GB; <br> Class A12, AN 82-00831E <br> XP002055972 <br> & JP 56 155 213 A (CHISSO CORP) , 1 <br> December 1981 <br> * abstract * <br> ----- | 1 | TECHNICAL FIELDS SEARCHED (Int.Cl.6) <br><br> C08L |

The present search report has been drawn up for all claims

| Place of search | Date of completion of the search | Examiner |
|---|---|---|
| THE HAGUE | 17 February 1998 | Goovaerts, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)